(19) Europäisches Patentamt / European Patent Office / Office européen des brevets

(11) **EP 3 480 255 A1**

(12) **EUROPEAN PATENT APPLICATION**
published in accordance with Art. 153(4) EPC

(43) Date of publication:
**08.05.2019 Bulletin 2019/19**

(51) Int Cl.:
**C08L 77/00** (2006.01)    **C08K 3/24** (2006.01)
**C08L 25/18** (2006.01)

(21) Application number: **17819872.7**

(22) Date of filing: **15.06.2017**

(86) International application number:
**PCT/JP2017/022067**

(87) International publication number:
**WO 2018/003512 (04.01.2018 Gazette 2018/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.06.2016 JP 2016129483**
**15.05.2017 JP 2017096305**

(71) Applicant: **Unitika Ltd.**
**Amagasaki-shi, Hyogo 660-0824 (JP)**

(72) Inventors:
• **MASAKI Tatsunori**
  **Kyoto 611-0021 (JP)**
• **KAMIKAWA Hiroo**
  **Kyoto 611-0021 (JP)**
• **MII Junichi**
  **Kyoto 611-0021 (JP)**
• **AMARI Taiyo**
  **Kyoto 611-0021 (JP)**
• **NISHIDA Keisuke**
  **Kyoto 611-0021 (JP)**

(74) Representative: **Vigand, Philippe et al**
**Novagraaf International SA**
**Chemin de l'Echo 3**
**1213 Onex - Genève (CH)**

(54) **THERMOPLASTIC RESIN COMPOSITION AND MOLDED BODY OBTAINED BY MOLDING SAME**

(57)    A thermoplastic resin composition which contains 100 parts by mass in total of a semiaromatic polyamide (A) and an aliphatic polyamide (B), 20 to 100 parts by mass of a bromine-based flame retardant (C) and 2 to 25 parts by mass of a flame retardant aid (D), and which is characterized in that: the mass ratio (A)/(B) is from 90/10 to 40/60; the semiaromatic polyamide (A) has a melting point of 280°C or higher; and the mass increase ratio R after 48-hour immersion in 50% sulfuric acid at 23°C is 50% or less.

EP 3 480 255 A1

**Description**

Technical Field

The present invention relates to a thermoplastic resin composition, more specifically to a resin composition containing a semiaromatic polyamide, and a molded body obtained by molding the same.

Background Art

Polyamides, which have excellent heat resistance, mechanical properties, and moldability, are used in a large number of electrical and electronic components and automotive engine-related parts.

In recent years, as the mode of mounting electrical and electronic components such as, specifically, connectors on an electronic substrate, a surface mounting mode by means of reflow using of lead-free solder has been used, in aspects of environment. Since substrates are introduced into a reflow furnace together with electrical and electronic components in this mode, molded bodies constituting the electrical and electronic components are required to have heat resistance to withstand heating in the reflow furnace.

For example, aliphatic polyamides such as polyamide 6 and polyamide 66 have a low melting point. Thus, molded bodies made of these resins are unfortunately melted and deformed due to reflowing. Additionally, polyamide 46 has a high melting point but is likely to absorb water. Then, in a molded body made of polyamide 46, there occurs a blistering phenomenon in which the moisture foams during reflow treatment to develop blisters on the surface of the molded body. It has been thus necessary to store the molded body under a low humidity environment. For this reason, in recent years, semiaromatic polyamides, which have a high melting point and a low water absorption rate, have been often used in molded bodies intended for electrical and electronic components to be surface mounted.

Since electrical and electronic components are required to have flame retardancy, a flame retardant is compounded in polyamides. For example, Patent Literature 1 discloses a resin composition in which a bromine-based flame retardant is compounded in a semiaromatic polyamide or copolymer-based semiaromatic polyamide. However, in semiaromatic polyamides, it is not possible to improve the fluidity because the melting point is close to the decomposition temperature in comparison with that of aliphatic polyamides and it is not possible to set a high molding temperature. Thus, unfortunately, it is not possible to mold semiaromatic polyamides in accordance with the recent downsizing and thinning in electrical and electronic components.

As a method of improving the fluidity of a resin composition containing a semiaromatic polyamide, there is a method including compounding an aliphatic polyamide in a resin composition. A resin composition containing a semiaromatic polyamide, however, may have a reduction in the heat resistance as well as a reduction in the chemical resistance, which is required of electrical and electronic components, because of containing an aliphatic polyamide. That is, electrical and electronic components have been used also in automotive parts in recent years due to progress in electrification of automobiles. Electrical and electronic components used in automotive parts are also required to have chemical resistance because chemicals such as gasoline, oil, sulfuric acid of batteries, wax, and car washing materials may be more likely to adhere to the components.

Semiaromatic polyamides have excellent heat resistance and chemical resistance, whereas aliphatic polyamides have poor heat resistance and chemical resistance. A resin composition containing a semiaromatic polyamide has an increase in the fluidity by compounding an aliphatic polyamide but unfortunately has a reduction in the heat resistance and chemical resistance.

Citation List

Patent Literature

Patent Literature 1: International Publication No. WO 2009/017043

Summary of Invention

Technical Problem

It is an object of the present invention to provide a resin composition containing a semiaromatic polyamide and a flame retardant, the thermoplastic resin composition having a suppressed reduction in the heat resistance and chemical resistance and an improved fluidity.

Solution to Problem

The present inventors have made intensive investigations to solve the problems described above, and as a result, have found that a semiaromatic polyamide resin composition having a specific composition and properties can solve the problems described above, having achieved the present invention.

That is, the gist of the present invention is as follows.

(1) A thermoplastic resin composition including:

100 parts by mass in total of a semiaromatic polyamide (A) and an aliphatic polyamide (B);
20 to 100 parts by mass of a bromine-based flame retardant (C); and
2 to 25 parts by mass of a flame retardant aid (D),

wherein the mass ratio (A)/(B) is from 90/10 to 40/60,
the semiaromatic polyamide (A) has a melting point of 280°C or higher; and
the mass increase ratio R after 48-hour immersion in 50% sulfuric acid at 23°C is 50% or less.

(2) The thermoplastic resin composition according to (1), wherein an aliphatic diamine component in the semiaromatic polyamide (A) is 1,10-decanediamine.

(3) The thermoplastic resin composition according to (1) or (2), wherein the aliphatic polyamide (B) is polyamide 6 and/or polyamide 66.

(4) The thermoplastic resin composition according to any of (1) to (3), wherein the mass ratio between the bromine-based flame retardant (C) and the flame retardant aid (D), (C/D), is 95/5 to 60/40.

(5) The thermoplastic resin composition according to any of (1) to (4), wherein the semiaromatic polyamide (A) contains an aliphatic monocarboxylic acid component, the aliphatic monocarboxylic acid has 15 to 30 carbon atoms, and the content of the aliphatic monocarboxylic acid component is 0.3 to 4.0 mol% based on the total monomers constituting the semiaromatic polyamide (A).

(6) The thermoplastic resin composition according to any of (1) to (5), wherein the bromine-based flame retardant (C) is brominated polystyrene.

(7) The thermoplastic resin composition according to any of (1) to (6), wherein the flame retardant aid (D) is one or more selected from the group consisting of zinc stannate, zinc borate, and antimony trioxide.

(8) The thermoplastic resin composition according to any of (1) to (7), further including a dripping inhibitor (E) .

(9) The thermoplastic resin composition according to any of (1) to (8), further including an inorganic reinforcing material (F).

(10) A molded body obtained by molding the thermoplastic resin composition according to any of (1) to (9).

Advantageous Effects of Invention

According to the present invention, it is possible to provide a thermoplastic resin composition having excellent heat resistance (reflow resistance), chemical resistance, flame retardancy, and mechanical properties and additionally having excellent fluidity in extrusion and molding.

Description of Embodiments

The present invention will be now described in detail. The thermoplastic resin composition of the present invention includes a semiaromatic polyamide (A), an aliphatic polyamide (B), a bromine-based flame retardant (C), and a flame retardant aid (D).

In the present invention, the semiaromatic polyamide (A) contains a dicarboxylic acid component and a diamine component as constituents, containing an aromatic dicarboxylic acid as the dicarboxylic acid component and an aliphatic diamine as the diamine component.

The dicarboxylic acid component constituting the semiaromatic polyamide (A) preferably contains terephthalic acid (T), and the content of terephthalic acid is preferably 95 mol% or more, more preferably 100 mol% in the dicarboxylic acid component from the viewpoint of heat resistance.

The diamine component in the semiaromatic polyamide (A) is preferably an aliphatic diamine having 8 to 12 carbon atoms from the viewpoint of heat resistance and processability. Examples of the aliphatic diamine having 8 to 12 carbon atoms include 1,8-octanediamine, 1,9-nonanediamine, 1,10-decanediamine, 1,11-undecanediamine, and 1,12-dodecanediamine, and of these, 1,10-decanediamine is preferred because of its high versatility. One of these aliphatic diamine may be used singly or two or more of these may be used in combination. From the viewpoint of improving the mechanical properties, it is preferred to use one of these singly.

In the present invention, specific examples of the semiaromatic polyamide (A) include polyamide 8T, polyamide 9T, polyamide 10T, polyamide 11T, and polyamide 12T.

The dicarboxylic acid component of the semiaromatic polyamide (A) may include a dicarboxylic acid other than terephthalic acid. Examples of the dicarboxylic acid other than terephthalic acid include aromatic dicarboxylic acid components such as phthalic acid, isophthalic acid, and naphthalenedicarboxylic acid, aliphatic dicarboxylic acids such as oxalic acid, malonic acid, succinic acid, glutaric acid, adipic acid, pimelic acid, suberic acid, azelaic acid, sebacic acid, undecanedioic acid, and dodecanedioic acid, and alicyclic dicarboxylic acids such as cyclohexanedicarboxylic acid. The dicarboxylic acid other than terephthalic acid is preferably contained in an amount of 5 mol% or less based on the total number of moles of the raw material monomers, and is more preferably substantially not contained.

The diamine component of the semiaromatic polyamide (A) may contain a diamine other than the aliphatic diamine component having 8 to 12 carbon atoms. Examples of the other diamines include aliphatic diamine components such as 1,2-ethanediamine, 1,3-propanediamine, 1,4-butanediamine, 1,5-pentanediamine, 1,6-hexanediamine, 1,7-heptanediamine, 1,13-tridecanediamine, 1,14-tetradecanediamine, and 1,15-pentadecanediamine, and alicyclic diamines such as cyclohexanediamine, and aromatic diamines such as xylylenediamine and benzenediamine. The diamine other than the aliphatic diamine component having 8 to 12 carbon atoms is preferably contained in an amount of 5 mol% or less based on the total number of moles of the raw material monomers, and is more preferably substantially not included.

The semiaromatic polyamide (A) may contain a lactam such as caprolactam and laurolactam or an ω-aminocarboxylic acid such as aminocaproic acid and 11-aminoundecanoic acid, as required.

In the present invention, the semiaromatic polyamide (A) may contain a monocarboxylic acid as a constituent, and preferably contains an aliphatic monocarboxylic acid as a constituent. With respect to a molded body obtained from a mixture in which the semiaromatic polyamide (A) having an aliphatic monocarboxylic acid as a constituent and the aliphatic polyamide (B) are dispersed, the semiaromatic polyamide (A) having high heat resistance is likely to be the main component in the molded body surface portion, which is susceptible to heat, and thus blisters are less likely to occur in the reflow step.

The aliphatic monocarboxylic acid preferably has 15 to 30 carbon atoms, more preferably 18 to 29 carbon atoms. When the semiaromatic polyamide (A) contains an aliphatic monocarboxylic acid having 15 to 30 carbon atoms, the fluidity is improved and the semiaromatic polyamide component likely to be the main component in the molded body surface. When the monocarboxylic acid has less than 15 carbon atoms, it may not be possible to obtain an effect of improving the fluidity in the semiaromatic polyamide (A). When the aliphatic monocarboxylic acid has more than 30 carbon atoms, the crystallization of the semiaromatic polyamide (A) may be inhibited and the moldability and the heat resistance may be reduced.

Examples of the aliphatic monocarboxylic acid having 15 to 30 carbon atoms include pentadecylic acid, palmitic acid, margaric acid, stearic acid, nonadecylic acid, arachidic acid, behenic acid, lignoceric acid, cerotic acid, heptacosanoic acid, montanic acid, and melissic acid. Of these, stearic acid, behenic acid, and montanic acid are preferred because of their high versatility.

One of the aliphatic monocarboxylic acids may be used singly or two or more of the monocarboxylic acids may be used in combination.

In the semiaromatic polyamide (A), the content of the aliphatic monocarboxylic acid component is preferably 0.3 to 4.0 mol%, more preferably 0.6 to 3.5 mol% based on the total monomers constituting the semiaromatic polyamide (A). When the content of the aliphatic monocarboxylic acid component is less than 0.3 mol%, the resulting semiaromatic polyamide (A) has a high molecular weight, decomposition gas may be generated in extrusion and molding, and an effect of improving the fluidity may not be obtained. In contrast, when the content of the aliphatic monocarboxylic acid component is more than 4.0 mol%, the semiaromatic polyamide (A) may have degraded mechanical properties.

The semiaromatic polyamide (A) is required to have a melting point of 280°C or higher, preferably has a melting point of 300°C or higher. When the melting point of the semiaromatic polyamide (A) is lower than 280°C, the thermoplastic resin composition may be melted and deformed in reflowing.

The semiaromatic polyamide (A) has a relative viscosity, serving as an index of the molecular weight, of preferably 1.5 to 3.5, more preferably 1.7 to 3.5, still more preferably 1.9 to 3.1, as measured in 96% sulfuric acid, at 25°C, with a concentration of 1 g/dL. When the relative viscosity of the semiaromatic polyamide (A) is less than 1.5, the thermoplastic resin composition may have degraded mechanical properties.

When the semiaromatic polyamide resin (A) has higher crystallinity, the resulting molded body has a higher crystallinity degree, and the heat resistance, reflow resistance, mechanical strength, and low water absorbency are improved. Thus, the semiaromatic polyamide (A) preferably has a crystallinity degree within a specific limited range. In the present invention, the crystal melting energy (ΔH) measured using a differential scanning calorimeter (DSC) is used as an index of the crystallinity degree. ΔH of the semiaromatic polyamide resin (A) is preferably 50 J/g or more, more preferably 55 J/g or more. When ΔH of the semiaromatic polyamide resin (A) falls below 50 J/g, it is not possible to sufficiently increase the crystallinity, and blisters in the resulting molded body may occur in the reflow step.

The semiaromatic polyamide (A) can be produced by using conventionally known methods such as a heating polymerization method and a solution polymerization method. The heating polymerization method is preferably used because of being industrially advantageous. An example of the heating polymerization method is a method including a step (i) of obtaining a reaction product from a dicarboxylic acid component, a diamine component, and a monocarboxylic acid component, and a step (ii) of polymerizing the obtained reaction product.

An examples of the step (i) includes a method in which a dicarboxylic acid powder and a monocarboxylic acid are mixed with each other, the mixture is heated in advance to a temperature equal to or higher than the melting point of the diamine and equal to or lower than the melting point of the dicarboxylic acid, and the diamine is added to the dicarboxylic acid powder and the monocarboxylic acid at this temperature such that the state of the powder of the aromatic dicarboxylic acid is maintained, substantially without allowing water to be included. Alternatively, an example of another method includes a method in which a suspension composed of a diamine in a molten state and a dicarboxylic acid in a solid state is stirred and mixed to prepare a mixed solution; then at a temperature lower than the melting point of the semiaromatic polyamide to be finally produced, the salt production reaction based on the reaction of the dicarboxylic acid, the diamine, and the monocarboxylic acid and the production reaction of a lower polymer based on the polymerization of the produced salt are performed; and thus, a mixture composed of the salt and the lower polymer is obtained. In this case, the reaction mixture may be ground while the reaction is being allowed to proceed, or alternatively, after the reaction, once the reaction mixture is taken out and then may be ground. The step (i) is preferably the former step (i), which is easy in controlling the shape of the product.

An example of the step (ii) is a method in which the reaction product obtained in the step (i) is subjected to solid phase polymerization at a temperature lower than the melting point of the semiaromatic polyamide to be finally produced, so as to achieve a high molecular weight of a predetermined molecular weight, and thus the semiaromatic polyamide is obtained. The solid phase polymerization is preferably performed at a polymerization temperature of 180 to 270°C, with a reaction time of 0.5 to 10 hours, in a flow of an inert gas such as nitrogen.

The reaction apparatuses for the step (i) and the step (ii) are not particularly limited, and conventionally known apparatuses may be used. The step (i) and the step (ii) may be performed with the same apparatus or may also be performed with different apparatuses.

In the production of the semiaromatic polyamide (A), a polymerization catalyst may be used to increase the efficiency of the polymerization. Examples of the polymerization catalyst include phosphoric acid, phosphorous acid, hypophosphorous acid, and the salts of these. The amount of the polymerization catalyst to be added is preferably usually 2 mol% or less based on the total monomers constituting the semiaromatic polyamide (A) .

The aliphatic polyamide (B) of the present invention is a polyamide containing no aromatic component in the main chain and examples thereof include poly ε-capramide (polyamide 6), polytetramethylene adipamide (polyamide 46), polyhexamethylene adipamide (polyamide 66), polyhexamethylene sebacamide (polyamide 610), polyhexamethylene dodecamide (polyamide 612), polyundecamethylene adipamide (polyamide 116), polyundecanamide (polyamide 11), polydecanamide (polyamide 12), polyamide copolymers including at least two different polyamide components of these, and mixtures thereof. Of these, polyamides having a constituent unit having 6 or less carbon atoms are preferred, and polyamide 6, polyamide 46, and polyamide 66 are preferred from the viewpoint of fluidity and economic efficiency.

The relative viscosity of the aliphatic polyamide (B) is not particularly limited and should be set as appropriate depending on the purpose. For example, in order to obtain a thermoplastic resin composition that is easy to mold, the aliphatic polyamide (B) has a relative viscosity of preferably 1.9 to 4.0, more preferably 2.0 to 3.5. When the aliphatic polyamide (B) has a relative viscosity of less than 1.9, some molded bodies may lack for toughness, and this lack may lead to a decrease in the mechanical properties. When the aliphatic polyamide (B) has a relative viscosity of more than 4.0, it becomes difficult to mold the thermoplastic resin composition, and the resulting molded body may have a poor appearance.

The mass ratio between the semiaromatic polyamide (A) and the aliphatic polyamide (B), (A/B), is required to be 90/10 to 40/60, is preferably 90/10 to 46/54, more preferably 90/10 to 50/50, still more preferably 80/20 to 50/50. When the content of the semiaromatic polyamide (A) is more than 90% by mass, that is, when the content of the aliphatic polyamide (B) is less than 10% by mass, the fluidity of the thermoplastic resin composition may decrease. In contrast, when the content of the semiaromatic polyamide (A) is less than 40% by mass, that is, when the content of the aliphatic polyamide (B) is more than 60% by mass, the reflow resistance of the thermoplastic resin composition may decrease.

In the bromine-based flame retardant (C) in the present invention, the content of the bromine atom contained in the compound is preferably 50% by mass or more, more preferably 58% by mass or more. When the content of the bromine atom is less than 50% by mass, the content of the bromine-based flame retardant (C) is increased in order to provide the necessary flame retardancy. Then, the mechanical properties of the thermoplastic resin composition may be decreased, or the amount of decomposition gas to be generated may be increased.

Examples of the bromine-based flame retardant (C) include hexabromocyclododecane, bis(dibromopropyl)tetrabromo-bisphenol A, bis(dibromopropyl)tetrabromo-bisphenol S, tris(dibromopropyl)isocyanurate, tris(tribromoneopentyl)phosphate, decabromodiphenylene oxide, brominated epoxy resin, bis(pentabromophenyl)ethane, tris(tribromophenoxy)triazine, ethylene bis(tetrabromophthal)imide, ethylene bis pentabromophenyl, polybromophenyl indane, brominated polystyrene, TBBA polycarbonate, brominated polyphenylene oxide, and polypentabromobenzyl acrylate. Of these, ethylene bis(tetrabromophthal)imide, brominated epoxy resin, and brominated polystyrene, which may be resistant to processing at high temperature, are preferred, and brominated polystyrene is more preferred. Examples of specific product names of brominated polystyrenes include "Great Lakes CP-44HF", "Great Lakes PBS-64HW", and "Great Lakes PDBS-80" manufactured by Chemtura Corporation and "SAYTEX HP-7010" and "SAYTEX HP-3010" manufactured by Albemarle Corporation. One of these may be used singly or two or more of these may be used in combination.

The content of the bromine-based flame retardant (C) is required to be 20 to 100 parts by mass, preferably 30 to 90 parts by mass based on 100 parts by mass in total of the semiaromatic polyamide (A) and the aliphatic polyamide (B). When the content of the bromine-based flame retardant (B) is less than 20 parts by mass, an effect of improving the flame retardancy cannot be obtained. In contrast, when the content of the bromine-based flame retardant (B) is more than 100 parts by mass, the thermoplastic resin composition has excellent flame retardancy whereas generation of decomposition gas in extrusion and molding is increased.

Examples of the flame retardant aid (D) in the present invention include sodium oxide, tin oxide, zinc stannate, zinc oxide, iron oxide, magnesium hydroxide, calcium hydroxide, zinc borate, antimony trioxide, antimony tetraoxide, and antimony pentaoxide. Of these, preferred are zinc stannate, zinc borate, and antimony trioxide, which are highly synergistic with the bromine-based flame retardant (C) and can suppress generation of decomposition gas. Examples of specific product names include "FLAMTARD S" (zinc stannate) manufactured by Nippon Light Metal Co., Ltd., "FIRE BRAKE 415" (zinc borate) manufactured by Borax, and "PATOX-M" (antimony trioxide) manufactured by NIHON SEIKO CO., LTD. One of these may be used singly or two or more of these may be used in combination.

As the flame retardant aid (D), a phosphorus-containing flame retardant may be used. Use of a phosphorus-containing flame retardant as the flame retardant aid (D) facilitates formation of a carbide film in combustion and particularly can improve the flame retardancy of thin molded bodies. A thermoplastic resin composition containing a phosphorus-containing flame retardant is particularly suitable for thin electrical and electronic component materials.

Examples of the phosphorus-containing flame retardant include phosphoric acid ester compounds, phosphinates, diphosphinates, and phosphates.

The phosphoric acid ester compound may be a monomer, oligomer, polymer, or a mixture thereof. Specific examples thereof include trimethyl phosphate, triethyl phosphate, tributyl phosphate, trioctyl phosphate, tributoxyethyl phosphate, triphenyl phosphate, tricresyl phosphate, cresyl diphenyl phosphate, octyl diphenyl phosphate, tri(2-ethylhexyl)phosphate, diisopropyl phenyl phosphate, trixylenyl phosphate, tris(isopropyl phenyl)phosphate, trinaphthyl phosphate, bisphenol A bisphosphate, hydroquinone bisphosphate, resorcinol bisphosphate, resorcinol-diphenyl phosphate, trioxybenzene triphosphate, substitution products thereof, and condensates thereof. Of these, phosphoric ester compounds having excellent die adhesion in molding, heat resistance, and moisture resistance of molded articles can be suitably used. Examples of the phosphoric ester compound include various phosphoric ester compounds manufactured by Daihachi Chemical Industry Co., Ltd., such as TPP [triphenyl phosphate], TXP [trixylenyl phosphate], CR-733S [resorcinol bis(diphenylphosphate)], PX200 [1,3-phenylene-tetrakis(2,6-dimethylphenyl)phosphoric acid ester], PX201 [1,4-phenylene-tetrakis(2,6-dimethylphenyl)phosphoric acid ester], and PX202 [4,4'-biphenylene-tetrakis(2,6-dimethylphenyl)phosphoric acid ester]. One of these may be selected or two or more of these may be used in combination.

A phosphinate is produced in an aqueous solution by using a phosphinic acid, a metal carbonate, and a metal hydroxide or metal oxide, and is essentially present as monomers; however, depending on the reaction conditions, the phosphinate may be present in a form of a polymeric phosphinate having a degree of condensation of 1 to 3. Examples of the metal component include metal carbonates, metal hydroxides, or metal oxides including a calcium ion, magnesium ion, aluminum ion and/or zinc ion.

Examples of the phosphinic acid suitable as a constituent of the phosphinate include dimethylphosphinic acid, ethylmethylphosphinic acid, diethylphosphinic acid, methyl-n-propylphosphinic acid, isobutylmethylphosphinic acid, octylmethylphosphinic acid, methylphenylphosphinic acid, and diphenylphosphinic acid, and diethylphosphinic acid is preferred.

Specific examples of the phosphinate include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate. Of these, aluminum diethylphosphinate and zinc diethylphosphinate are preferablly used because of being excellent in the balance between flame retardancy and electrical properties, and aluminum diethylphosphinate is more preferably used.

Examples of the diphosphinic acid suitable as a constituent of the diphosphinate include methane-di(methylphosphinic acid) and benzene-1,4-di(methylphosphinic acid).

Specific examples of the diphosphinate include calcium methane-di(methylphosphinate), magnesium methane-di(methylphosphinate), aluminum methane-di(methylphosphinate), zinc methane-di(methylphosphinate), calcium benzene-1,4-di(methylphosphinate), magnesium benzene-1,4-di(methylphosphinate), aluminum benzene-1,4-di(methylphosphinate), and zinc benzene-1,4-di(methylphosphinate). Of these, aluminum methane-di(methylphosphinate) and zinc methane-di(methylphosphinate) are preferably used because of being excellent in the balance between flame retardancy and electrical properties.

A phosphinate and a diphosphinate may be mixed and used. "Exolit OP1230", "Exolit OP1240", "Exolit OP1311", "Exolit OP1312", and "Exolit OP1314" manufactured by Clariant GmbH, which are prepared by mixing a phosphinate such as aluminum diethylphosphinate and zinc diethylphosphinate with a diphosphinate such as aluminum methane-di(methylphosphinate) and zinc methane-di(methylphosphinate), are suitably used in respect of having excellent mixability with polyamide resins and easily providing necessary flame retardancy.

A phosphorus-containing flame retardant such as mixtures of a phosphinate and a diphosphinate is preferably used in combination with a nitrogen-containing flame retardant. Examples of the nitrogen-containing flame retardant that can be used in combination include melamine cyanurate, melamine polyphosphonate, melamine phosphate, and phosphazene compounds. Of these, melamine polyphosphonate is preferred in respect of being highly effective when used in combination with a mixture of a phosphinate and a diphosphinate. In such a case, the ratio between the mixture of a phosphinate and a diphosphinate $(A_2)$ and melamine polyphosphonate $(B_2)$ contained $(A_2:B_2)$ is 1:1 to 8:1, particularly preferably 2:1 to 4:1 on a mass ratio basis.

A phosphorus-containing flame retardant such as mixtures of a phosphinate and a diphosphinate is preferably used in combination with aluminum phosphate or aluminum hypophosphite.

A phosphorus-containing flame retardant such as mixtures of a phosphinate and a diphosphinate is preferably used in combination with a hydrazide-based metal deactivator. Examples of the hydrazide-base metal deactivator include 2,3-bis[3-(3,5-di-tert-butyl-4-hydroxyphenyl)propionyl]propionohydrazide and decamethylenecarboxylic acid disalicyloyl hydrazide. A specific product name is CDA-10 manufactured by ADEKA CORPORATION.

When the mixture of a phosphinate and a diphosphinate is used, addition of 0.1 to 50% by mass of calcium hydroxide, calcium oxide, calcium carbonate, boehmite, magnesium oxide, a fatty acid metal salt, or the like based on 100% by mass of the mixture of a phosphinate and a diphosphinate can effectively prevent corrosion.

The content of the flame retardant aid (D) is required to be 2 to 25 parts by mass, preferably 5 to 20 parts by mass based on 100 parts by mass in total of the semiaromatic polyamide (A) and the aliphatic polyamide (B). When the content of the flame retardant aid (D) is less than 2 parts by mass, it is not possible to obtain an effect of improving the flame retardancy. In contrast, when the content of the flame retardant aid (D) is more than 25 parts by mass, the resulting thermoplastic resin composition will have degraded mechanical physical properties and operability in extrusion.

The mass ratio between the bromine-based flame retardant (C) and the flame retardant aid (D) to be used in the present invention, (C/D), is preferably 95/5 to 60/40, more preferably 90/10 to 70/30. When the content of the bromine-based flame retardant (C) is 95% by mass or less, it is possible to improve the flame retardancy. A content of the bromine-based flame retardant (C) is less than 60% by mass may be economically disadvantageous because the effect of improving the flame retardancy becomes saturated even if the mass ratio of the flame retardant aid (D) is increased.

The thermoplastic resin composition of the present invention may contain a dripping inhibitor (E). As the dripping inhibitor (E), a known compound may be used provided that the compound has an effect of preventing dripping in combustion. Examples of the dripping inhibitor (E) include polytetrafluoroethylene, polyhexafluoropropylene, tetrafluoroethylene-hexafluoropropylene copolymers, tetrafluoroethylene-perfluoroalkyl vinyl ether copolymers, tetrafluoroethylene-ethylene copolymers, hexafluoropropylene-propylene copolymers, polyvinylidene fluoride, vinylidene fluoride-ethylene copolymers, polychlorotrifluoroethylene, and modified polytetrafluoroethylene. Of these, polytetrafluoroethylene and modified polytetrafluoroethylene, which have a high effect of preventing dripping, are preferred. Examples of specific product names include "POLYFLON MPA FA-500H" (polytetrafluoroethylene) manufactured by Daikin Industries, Ltd. and "METABLEN A-3750" and "METABLEN A-3800" (modified polytetrafluoroethylene) manufactured by Mitsubishi Rayon Co., Ltd. One of these may be used singly or two or more of these may be used in combination.

The content of the dripping inhibitor (E) is preferably 0.3 to 3.0 parts by mass, more preferably 0.3 to 2.5 parts by mass based on 100 parts by mass in total of the semiaromatic polyamide (A) and the aliphatic polyamide (B). When the content of the dripping inhibitor (E) is less than 0.3 parts by mass, the effect of preventing dripping in combustion is not sufficient. When the content is more than 3.0 parts by mass, it may become difficult to melt-knead the thermoplastic resin composition.

The thermoplastic resin composition of the present invention may further contain an inorganic reinforcing material (F). Examples of the inorganic reinforcing material (F) include fibrous reinforcing materials.

Examples of the fibrous reinforcing material include glass fiber, carbon fiber, boron fiber, asbestos fiber, polyvinyl alcohol fiber, polyester fiber, acryl fiber, aramid fiber, polybenzoxazole fiber, kenaf fiber, bamboo fiber, hemp fiber, bagasse fiber, high-strength polyethylene fiber, alumina fiber, silicon carbide fiber, potassium titanate fiber, brass fiber, stainless fiber, steel fiber, ceramic fiber, and basal fiber. Of these, glass fiber, carbon fiber, and aramid fiber are preferred because of having a high effect of improving the mechanical properties, having heat resistance that may withstand a heating temperature in melt-kneading with the polyamide, and being easily available. Examples of specific product names of glass fiber include "CS3G225S" manufactured by Nitto Boseki Co., Ltd. and "T-781H" manufactured by Nippon Electric Glass Co., Ltd. An example of a specific product name of carbon fiber includes "HTA-C6-NR" manufactured by Toho Tenax Co., Ltd. One of these fibrous reinforcing materials may be used singly or two or more of these may be used in combination.

The fiber length and fiber diameter of the fibrous reinforcing material are not particularly limited. The fiber length is preferably 0.1 to 7 mm, more preferably 0.5 to 6 mm. Setting the fiber length of the fibrous reinforcing material at 0.1 to 7 mm enables the resin composition to be reinforced without adversely affecting the moldability. The fiber diameter is preferably 3 to 20 $\mu$m, more preferably 5 to 13 $\mu$m. Setting the fiber diameter at 3 to 20 $\mu$m enables the resin composition to be efficiently reinforced without breakage in melt-kneading. Examples of the cross-sectional shape include a circle, a rectangle, an ellipse, and other non-circular cross-sections. Of these, a circle is preferred.

As the inorganic reinforcing material (F), a needle reinforcing material, or planar reinforcing material may be used in addition to the fibrous reinforcing material. When the fibrous reinforcing material is used particularly in combination with a needle reinforcing material or planar reinforcing material, it is possible to reduce warping of the molded body or to improve the drip resistance during a flame retardant test. Examples of the needle reinforcing material include wollastonite, potassium titanate whiskers, zinc oxide whiskers, and magnesium sulfate whiskers. Examples of the planar reinforcing material include talc, mica, and glass flakes.

The content of the inorganic reinforcing material (F) include preferably 5 to 200 parts by mass, more preferably,5 to 180 parts by mass, still more preferably 10 to 170 parts by mass based on 100 parts by mass in total of the semiaromatic polyamide (A) and the aliphatic polyamide (B). When the content of the inorganic reinforcing material (F) is less than 5 parts by mass, the effect of reinforcing the mechanical strength may not be sufficient. When the content is more than 200 parts by mass, the effect of reinforcing the mechanical strength may be reduced, the workability of the thermoplastic resin composition in melt-kneading may be decreased, or it may become difficult to obtain pellets.

The thermoplastic resin composition of the present invention may further contain an antioxidant (G). Examples of the antioxidant (G) include phosphorus-based antioxidants, hindered phenol-based antioxidants, hindered amine-based antioxidants, triazine-based compounds, and sulfur-based compounds. Of these, phosphorus-based antioxidants are preferred. When the thermoplastic resin composition containing an inorganic reinforcing material (F) is retained in a cylinder at high temperature for a long period and the inorganic reinforcing material (F) has been surface-treated, the surface treatment agent may be thermally decomposed to cause degradation of the mechanical properties. However, in the present invention, even when the resin composition is retained in the cylinder for a long period, that is, even when the resin is retained in the cylinder for a long period due to a long molding cycle or a small amount to be injected in injection molding, inclusion of an antioxidant (G) can suppress a decrease in the tensile strength of the resin composition. The antioxidant (G) is usually included for the purpose of preventing decreasing the molecular weight of the resin composition or degrading the color of the semiaromatic polyamide (A). In the present invention, the antioxidant (G) can improve the retention stability of the resin composition, in addition to these effects. When the antioxidant (G) is contained, the content is preferably 0.1 to 5 parts by mass, more preferably 0.2 to 5 parts by mass based on 100 parts by mass of the semiaromatic polyamide (A).

The phosphorus-based antioxidant may be either an inorganic compound or an organic compound. Examples thereof include, but are not particularly limited to, inorganic phosphoric acid salts such as monosodium phosphate, disodium phosphate, trisodium phosphate, sodium phosphite, calcium phosphite, magnesium phosphite, and manganese phosphite; triphenyl phosphite, trioctadecyl phosphite, tridecyl phosphite, trinonylphenyl phosphite, diphenyl isodecyl phosphite, bis(2,6-di-tert-butyl-4-methylphenyl)pentaerythritol diphosphite, tris(2,4-di-tert-butylphenyl)phosphite, distearyl pentaerythritol diphosphite, bis(nonylphenyl)pentaerythritol diphosphite, and tetrakis(2,4-di-t-butylphenyl)-4,4'-biphenylene diphosphite. Of these, bis(2,6-di-tert-butyl-4-methylphenyl)pentaerythritol diphosphite and tetrakis(2,4-di-t-butylphenyl)-4,4'-biphenylene diphosphite are preferred. Examples of specific product names include "ADK STAB PEP-36" (bis(2,6-di-tert-butyl-4-methylphenyl)pentaerythritol diphosphite), "ADK STAB PEP-8" (distearyl pentaerythritol diphosphite), and "ADK STAB PEP-4C" (bis(nonylphenyl)pentaerythritol diphosphite) manufactured by ADEKA CORPORATION, and "Hostanox P-EPQ" (tetrakis(2,4-di-t-butylphenyl)-4,4'-biphenylene diphosphite) manufactured by Clariant GmbH. One of these may be used singly or two or more of these may be used in combination.

The thermoplastic resin composition of the present invention may further contain another polymer as required. Examples of another polymer include alicyclic polyamides such as polyamide 9C, polyesters such as polyethylene terephthalate, polybutylene terephthalate, liquid crystal polymers, polyarylate, and polycyclohexanedimethylene terephthalate, polyolefins such as polyethylene, polystyrene, and polypropylene, polyphenylene sulfide, polyphenylene ether, and polyetheretherketone.

The thermoplastic resin composition of the present invention may contain other additives as required. Examples of the other additives include fillers such as talc, swelling clay minerals, silica, alumina, glass beads, and graphite, pigments, dyes, antistatic agents, planar reinforcing materials, heat stabilizers, anti-impact modifiers, plasticizers, mold release agents, slip agents, crystal nucleating agents, organic peroxides, terminal blocking agents, and sliding modifiers. A method for adding other additives is not particularly limited as long as the effect is not impaired. Such additives are added, for example, when the polyamide is polymerized or melt-kneaded.

The thermoplastic resin composition of the present invention may also contain a light stabilizer. When a molded body of the thermoplastic resin composition containing a white pigment such as titanium oxide is used outdoors as an exhaust finisher or an LED reflector, titanium oxide may facilitate photolysis, and thus the thermoplastic resin composition preferably contains a light stabilizer. Examples of the light stabilizer include benzophenone-based compounds, benzotriazole-based compounds, salicylate-based compounds, hindered amine-based compounds, and hindered phenolic compounds. Of these, hindered amine-based compounds are preferred. When the light stabilizer is contained, the content is preferably 0.1 to 5 parts by mass, more preferably 0.2 to 5 parts by mass based on 100 parts by mass of the thermoplastic resin composition. The thermoplastic resin composition can improve the light stability by containing 0.1 to 5 parts by mass of the light stabilizer.

In the thermoplastic resin composition, the light stabilizer and the antioxidant are preferably used in combination. The combination can improve the retention stability in molding and efficiently prevent light degradation due to ultraviolet radiation or the like in use.

The thermoplastic resin composition of the present invention, which is constituted by the constituents described above and produced by a production method described below, has excellent heat resistance (reflow resistance), chemical resistance, flame retardancy, and mechanical properties and additionally has excellent fluidity in extrusion and molding.

In the present invention, the chemical resistance was evaluated by a sulfuric acid immersion test in which the thermoplastic resin composition is immersed in 50% sulfuric acid at 23°C for 48 hours, as the mass increase ratio after the immersion R. The mass increase ratio is 50% or less, preferably 45% or less, more preferably 40% or less, still more preferably 30% or less. When the thermoplastic resin composition has a mass increase ratio R of more than 50%, it may be difficult to use the resulting molded body as an automotive part or the like, to which chemicals may adhere.

In the present invention, the method for mixing raw materials is not particularly limited, but a melt-kneading method is preferred. Examples of the melt-kneading method include methods in which a batch-type kneader such as a Brabender, Banbury mixer, Henschel mixer, helical rotor, roll, single-screw extruder, or twin-screw extruder is employed. A melt-kneading temperature is selected from a region in which the semiaromatic polyamide (A) melts but does not decompose. When the kneading temperature is excessively high, not only the semiaromatic polyamide (A) decomposes, but also the aliphatic polyamide (B) and bromine-based flame retardant (C) may decompose. Thus, the melt-kneading temperature is preferably (Tm - 20°C) to (Tm + 50°C) with respect to the melting point (Tm) of the semiaromatic polyamide (A).

In melt-kneading, the semiaromatic polyamide (A) and the aliphatic polyamide (B) are preferably mixed by first bringing the semiaromatic polyamide (A) into a molten state and then additionally feeding the aliphatic polyamide (B) to a melt-kneading machine. Specifically, an example of the method is a method in which the semiaromatic polyamide (A), the flame retardant and the like are fed from the base (main feed port) of a twin-screw extruder and caused to melt and then the aliphatic polyamide (B) is fed through a side feeder from midway along the extruder.

Examples of a method for granulating the thermoplastic resin composition of the present invention include a method in which the melt is extruded into a strand form and the extruded strand is then formed into pellets, a method in which the melt is hot-cut or underwater-cut into pellets, a method in which the melt is extruded and the extrudate is cut into a sheet form, and a method in which the melt is extruded into a block form and the extruded block is ground into powder.

Examples of a method for molding the thermoplastic resin composition of the present invention include an injection molding method, an extrusion molding method, a blow molding method, and a sinter molding method. The injection molding method is preferred because of its high effect of improving the mechanical properties and moldability. Examples of injection molding machines include, but are not particularly limited to, a screw in-line-type injection molding machine and a plunger-type injection molding machine. The thermoplastic resin composition heat-melted in the cylinder of the injection molding machine is metered every shot, injected into a mold in a molten state, cooled and solidified in a predetermined shape, and then taken out as a molded body from the mold. The resin temperature in injection molding is preferably (Tm) to (Tm + 50°C). In heat-melting of the thermoplastic resin composition, as pellets of the thermoplastic resin composition to be used, sufficiently dried pellets are preferably used.

The thermoplastic resin composition of the present invention can be used in broad applications such as automotive parts, electrical and electronic components, miscellaneous goods, and civil engineering and construction materials. The thermoplastic resin composition, which has excellent flame retardancy, is particularly suitable for electrical and electronic components. Examples of the automotive part include thermostat covers, IGBT module components of inverters, insulator members, exhaust finishers, power device enclosures, ECU enclosures, ECU connectors, electrical insulating materials for motors and coils, and coating materials for cables. Examples of the electrical and electronic component include connectors, LED reflectors, switches, sensors, sockets, capacitors, jacks, fuse holders, relays, coil bobbins, breakers, electromagnetic switches, holders, plugs, enclosure components for electrical devices such as portable personal computers and word processors, resistors, and ICs and LED housings.

Examples

Hereinafter, the present invention is described specifically by way of Examples, but the present invention is not limited by these Examples.

1. Measurement Methods

The physical properties of a semiaromatic polyamide and a thermoplastic resin composition were measured by the following methods.

(1) Relative Viscosity

The relative viscosity was measured by using 96% by mass sulfuric acid as a solvent at a concentration of 1 g/dL, at 25°C.

(2) Melting Point and Crystal Melting Energy of Semiaromatic Polyamide (A)

By using a differential scanning calorimeter DSC-7 manufactured by Perkin-Elmer Corp., a sample was heated to 350°C at a heating speed of 20°C/min, the sample was maintained at 350°C for 5 minutes, and then cooled to 25°C at a cooling speed of 20°C/min. Thereafter, the sample was maintained at 25°C for 5 minutes and then again heated at a heating speed of 20°C/min, during which the endothermic peak top was taken as the melting point (Tm). Additionally, a value obtained by dividing the area of the endothermic peak by the mass of the sample was taken as the crystal melting energy ($\Delta H$).

(3) Melt Flow Rate (MFR)

The melt flow rate was measured according to JIS K7210, at 340°C under a load of 1.2 kgf.

(4) Mechanical Properties

The thermoplastic resin composition was injection molded by using an injection molding machine Model S2000i-100B (manufactured by Fanuc Corporation) to prepare a specimen (dumbbell piece). The injection molding was performed at a cylinder temperature of (melting point (Tm) + 15°C) and a die temperature of 135°C.
The specimen obtained was used to measure the flexural strength and the flexural modulus of elasticity according to ISO178.
Practically, the flexural strength is preferably 110 MPa or more, more preferably 120 MPa or more, still more preferably 140 MPa or more. Practically, the flexural modulus of elasticity is preferably 3 GPa or more, more preferably 5 GPa or more.

(5) Bar flow fluidity

The thermoplastic resin composition was molded into a specimen using an injection molding machine Model S2000i-100B (manufactured by Fanuc Corporation) under the conditions of a cylinder temperature of (Tm + 15°C), a die temperature of 135°C, an injection pressure of 150MPa, an injection time of 8 seconds, and a set injection speed of 150 mm/second. The flowing length of the specimen was measured and taken as the bar flow flowing length. As the die, a bar flow test die having a thickness of 0.5 mmt, a width of 20 mm, and a total length of 980 mm was used. The bar flow flowing length will be an index of the fluidity. Practically, the bar flow flowing length is preferably 100 mm or more, more preferably 110 mm or more.

(6) Flame Retardancy

An injection molding machine J35AD (manufactured by The Japan Steel Works, LTD.) was used under conditions of a cylinder temperature of (Tm + 25°C) and a die temperature of 135°C to prepare a planer specimen of 127 mm $\times$ 12.7 mm $\times$ thickness 0.8 mm. Additionally, a planar specimen of 127 mm $\times$ 12.7 mm $\times$ thickness 0.4 mm was prepared.

The specimens obtained were used to evaluate the flame retardancy in accordance with the standard of UL94 (the standard specified by Under Writers Laboratories Inc., U.S.) shown in Table 1. Practically, V-0 is preferred for the thickness of 0.8 mm, and V-1 is preferred for the thickness of 0.4 mm.

[Table 1]

| Evaluation | V-0 | V-1 | V-2 |
|---|---|---|---|
| Afterflame time per application | 10 seconds or less | 30 seconds or less | 30 seconds or less |
| Total afterflame time for 5 specimens, 10 applications in total | 50 seconds or less | 250 seconds or less | 250 seconds or less |
| Cotton ignition by dripping | No | No | Yes |
| Burnout of sample | No | No | No |

(7) Chemical Resistance (Sulfuric Acid Immersion Test)

An injection molding machine J35AD (manufactured by The Japan Steel Works, LTD.) was used under conditions of a cylinder temperature of (Tm + 25°C) and a die temperature of 135°C to prepare a planer specimen of 20 mm × 20 mm × thickness 0.5 mm. The specimen obtained was subjected to immersion treatment under an environment of 23°C and under conditions of 48 hours in 50% sulfuric acid to determine the masses before and after the immersion treatment. Then, the mass increase ratio R represented by the following expression was calculated.

$$R = (Wp - Wi)/((1 - Cf/100) \times Wi) \times 100$$

Wp: Specimen weight after the immersion treatment (g)
Wi: Specimen weight before the immersion treatment (g)
Cf: Content of the inorganic reinforcing material (F) in the thermoplastic resin composition (% by mass)

(8) Heat resistance (Reflow Resistance)

A specimen prepared by the method described in (7) above was left to stand in a constant-temperature constant-humidity chamber (FH14C type manufactured by ETAC) at 85°C and 85% RH for 168 hours, and placed in a reflow tester (manufactured by CIF, FT-02) to check the change in the appearance. The temperature conditions of the reflow tester was controlled by the preheat temperature (150°C to 220°C, 115 seconds), the reflow temperature (220°C or higher, 50 seconds), and the maximum temperature in reflowing (260°C, within 10 seconds). A specimen having no change in the appearance was evaluated as G, and a specimen having blisters occurred in the appearance was evaluated as P.

2. Raw Materials

The raw materials used in Examples and Comparative Examples are shown below.

(1) Semiaromatic Polyamide (A)

• Semiaromatic Polyamide (A-1)

In a ribbon blender-type reaction apparatus, 4.70 kg of terephthalic acid (TPA) in a power form as the aromatic dicarboxylic acid component, 0.33 kg of stearic acid (STA) as the monocarboxylic acid component, and 9.3 g of sodium hypophosphite monohydrate as the polymerization catalyst were placed, and heated to 170°C while stirred at a number of rotations of 30 rpm under sealing with nitrogen. Subsequently, while the temperature was maintained at 170°C and the number of rotations was maintained at 30 rpm, by using a liquid injection apparatus, 4.98 kg of 1,10-decanediamine (DDA) heated to 100°C was added to the mixture as the aliphatic diamine component, continuously (continuous liquid injection method) over 2.5 hours to obtain a reaction product. The molar ratio between the raw material monomers was TPA:DDA:STA = 48.5:49.6:1.9 (the equivalent ratio between the functional groups was TPA:DDA:STA = 49:50:1).
Successively, the reaction product obtained was heated in the same reaction apparatus to be polymerized in a flow of nitrogen gas at 250°C for 8 hours, at a number of rotations of 30 rpm, and thus, a powder of a semiaromatic polyamide was prepared.

Thereafter, the powder obtained of the semiaromatic polyamide was formed into a strand shape by using a twin screw kneading machine, the strand was made to pass through a water tank to be solidified under cooling, and the solidified strand was cut into a pellet with a pelletizer to yield semiaromatic polyamide (A-1) pellets.

• Semiaromatic Polyamides (A-2) to (A-9)

The semiaromatic polyamides (A-2) to (A-9) were obtained in the same manner as in the case of preparation of the semiaromatic polyamide (A-1) except that the resin compositions were altered as shown in Table 2.

The resin compositions and values of the properties of the semiaromatic polyamide obtained are shown in Table 2.

[Table 2]

| | | | | Semiaromatic polyamide (A) | | | | | | | | |
|---|---|---|---|---|---|---|---|---|---|---|---|---|
| | | | | A-1 | A-2 | A-3 | A-4 | A-5 | A-6 | A-7 | A-8 | A-9 |
| Resin composition | Dicarboxylic acid component | Type | | TPA | TPA | TPA | TPA | TPA | TPA | TPA | TPA | TPA |
| | | Content | mol% | 48.5 | 49.1 | 48.5 | 48.5 | 43.7 | 48.5 | 48.5 | 45.1 | 44.1 |
| | | Type | | - | - | - | - | IPA | - | - | SEA | SEA |
| | | Content | mol% | - | - | - | - | 4.9 | - | - | 3.4 | 4.4 |
| | Diamine component | Type | | DDA | DDA | DDA | DDA | DDA | NDA | DDA | DDA | DDA |
| | | Content | mol% | 49.6 | 50.0 | 49.6 | 49.6 | 49.6 | 49.6 | 49.6 | 49.6 | 49.6 |
| | Monocarboxylic acid component | Type | | STA | STA | BEH | MON | STA | STA | BA | STA | STA |
| | | Content | mol% | 1.9 | 0.9 | 1.9 | 1.9 | 1.9 | 1.9 | 1.9 | 1.9 | 1.9 |
| Values of properties | Melting point | | °C | 317 | 317 | 314 | 315 | 311 | 313 | 317 | 305 | 297 |
| | Relative viscosity | | | 2.25 | 2.71 | 2.21 | 2.22 | 2.21 | 2.3 | 2.24 | 2.22 | 2.23 |
| | Crystal melting energy | | J/g | 60 | 58 | 60 | 60 | 55 | 51 | 59 | 54 | 47 |
| | Melt flow rate | | g/10 minute | 75 | 43 | 81 | 89 | 77 | 82 | 58 | 85 | 103 |

TPA: terephthalic acid, IPA: isophthalic acid, SEA: sebacic acid,

DDA: 1,10-decanediamine, NDA: 1,9-nonanediamine,

STA: stearic acid, BEH: behenic acid, MON: montanic acid, BA: benzoic acid,

(2) Aliphatic Polyamide (B)

- B-1: polyamide 6, A1015 manufactured by UNITIKA LTD., relative viscosity: 2.02
- B-2: polyamide 66, Leona 1200 manufactured by Asahi Kasei Chemicals Corporation, relative viscosity: 2.45
- B-3: polyamide 46, TW300 manufactured by DSM, relative viscosity: 2.75

(3) Bromine-based Flame Retardant (C)

- C-1: brominated polystyrene, PDBS-80 manufactured by Chemtura Corporation, bromine content: 59%

- C-2: brominated polystyrene, PBS-64HW manufactured by Chemtura Corporation, bromine content: 64%

(4) Flame Retardant Aid (D)

- D-1: zinc stannate, FLAMTARD S manufactured by Nippon Light Metal Co., Ltd.

- D-2: zinc borate, FIRE BRAKE 415 manufactured by Borax

- D-3: aluminum phosphinate-based flame retardant, Exolit OP1230 manufactured by Clariant Chemicals

- D-4: antimony trioxide, PATOX-M manufactured by NIHON SEIKO CO., LTD.

(5) Dripping Inhibitor (E)

- E-1: polytetrafluoroethylene, POLYFLON MPA FA500H manufactured by Daikin Industries, Ltd.

- E-2: acryl-modified polytetrafluoroethylene, METABLEN A-3750, Mitsubishi Rayon Co., Ltd.

(6) Inorganic Reinforcing Material (F)

- F-1: glass fiber, CS3G225S manufactured by Nitto Boseki Co., Ltd., average fiber diameter: 9.5 $\mu$m, average fiber length: 3 mm

(7) Antioxidant (G)

- G-1: tetrakis(2,4-di-tert-butylphenyl)4,4'-biphenylene-di-phosphonite, Hostanox P-EPQ manufactured by Clariant GmbH

Example 1

Dry blended were 90 parts by mass of the semiaromatic polyamide (A-1), 48 parts by mass of the bromine-based flame retardant (C-1), 9 parts by mass of the flame retardant aid (D-1), 1.8 parts by mass of the dripping inhibitor (E-1), and 0.5 parts by mass of the antioxidant (G-1). The mixture obtained was metered by using a loss-in-weight type continuous metering feeder CE-W-1 (manufactured by Kubota Corporation) and fed to the main feed port of a co-rotating twin screw extruder model TEM 26SS having a screw diameter of 26 mm with L/D 50 (manufactured by Toshiba Machine Co., Ltd.) and melt-kneaded. On the way, 10 parts by mass of the aliphatic polyamide (B-1) was fed from the side feeder 1, 68 parts by mass of the inorganic reinforcing material (F-1) was fed from the side feeder 2 further downstream, and the resulting mixture was further kneaded. The kneaded mixture was taken out from the die into a strand shape, and then allowed to pass through a water tank to be cooled and solidified. The solidified product was cut with a pelletizer to yield a thermoplastic resin composition pellets. The barrel temperature of the extruder was set at 310 to 340°C, the screw rotation number was set at 250 rpm, and the discharge rate was set at 25 kg/h.

Examples 2 to 58 and Comparative Examples 1,4 to 10, 13 to 19

The same operations as in Examples 1 were performed except that the compositions of the resin compositions were altered as shown in Tables 3 to 6. In Examples 24 and 54, no dripping inhibitor (E) was blended in dry blending, in Comparative Examples 1 and 10, no aliphatic polyamide (B) was fed from the side feeder 1, and in Comparative Examples 5, 14, and 15, no bromine-based flame retardant (C) was blended in dry blending.

Comparative Example 2

Melt-kneading was performed in the same manner as in Example 6 to obtain thermoplastic resin composition pellets except that 54 parts by mass of the aliphatic polyamide (B-1) was not fed from the side feeder 1 but 54 parts by mass of the aliphatic polyamide (B-1) was dry blended together with the semiaromatic polyamide (A-1), the bromine-based flame retardant (C-1), the flame retardant aid (D-1), the dripping inhibitor (E-1), and the antioxidant (G-1) and fed to the main feed port of a co-rotating twin screw extruder, and the inorganic reinforcing material (F-1) was fed from the side feeder 2 downstream.

Comparative Examples 3, 11, and 12

Thermoplastic resin composition pellets were obtained in the same manner as in Comparative Example 2 except that the mass ratio between the semiaromatic polyamide (A-1) and the aliphatic polyamide (B-1) and the type and parts by mass of the flame retardant aid (D) were altered.
The compositions and the properties obtained of the thermoplastic resin compositions are shown in Tables 3 to 6.

[Table 3]

| | | Composition of thermoplastic resin composition | | | | | | | | | | | | | | | | Properties | | | | | | |
|---|---|---|---|---|---|---|---|---|---|---|---|---|---|---|---|---|---|---|---|---|---|---|---|---|---|
| | | Semiaromatic polyamide (A) | | Aliphatic polyamide (B) | | | Bromine-based flame retardant (C) | | Flame retardant aid (D) | | Dripping inhibitor (E) | | Inorganic reinforcing material (F) | Antioxidant (G) | (C)/(D) mass ratio | Chemical resistance | Mechanical properties | | Bar flow fluidity | Flame retardancy | | Heat resistance |
| | | | | | | | | | | | | | | | | | | | | UL94 | | |
| | | Type | Parts by mass | Type | Parts by mass | Feed port | Type | Parts by mass | Type | Parts by mass | Type | Parts by mass | Parts by mass | Parts by mass | | Mass increase ratio R | Flexural strength | Flexural modulus of elasticity | | Thickness 0.8mm | Thickness 0.4mm | Appearance after reflow test |
| | | | | | | | | | | | | | | | | % | MPa | GPa | mm | | | |
| Example | 1 | A-1 | 90.0 | B-1 | 10.0 | Side | C-1 | 48.0 | D-1 | 9.0 | E-1 | 1.8 | 68.0 | 0.5 | 84/16 | 2 | 232 | 11.5 | 113 | V-0 | V-2 | G |
| | 2 | A-1 | 80.0 | B-1 | 20.0 | Side | C-1 | 48.0 | D-1 | 9.0 | E-1 | 1.8 | 68.0 | 0.5 | 84/16 | 13 | 233 | 11.4 | 132 | V-0 | V-2 | G |
| | 3 | A-1 | 70.0 | B-1 | 30.0 | Side | C-1 | 48.0 | D-1 | 9.0 | E-1 | 1.8 | 68.0 | 0.5 | 84/16 | 28 | 235 | 11.5 | 154 | V-0 | V-2 | G |
| | 4 | A-1 | 60.0 | B-1 | 40.0 | Side | C-1 | 48.0 | D-1 | 9.0 | E-1 | 1.8 | 68.0 | 0.5 | 84/16 | 35 | 238 | 11.6 | 177 | V-0 | V-2 | G |
| | 5 | A-1 | 50.0 | B-1 | 50.0 | Side | C-1 | 48.0 | D-1 | 9.0 | E-1 | 1.8 | 68.0 | 0.5 | 84/16 | 42 | 240 | 11.5 | 190 | V-0 | V-2 | G |
| | 6 | A-1 | 46.0 | B-1 | 54.0 | Side | C-1 | 48.0 | D-1 | 9.0 | E-1 | 1.8 | 68.0 | 0.5 | 84/16 | 43 | 240 | 11.5 | 192 | V-0 | V-2 | G |
| | 7 | A-1 | 40.0 | B-1 | 60.0 | Side | C-1 | 48.0 | D-1 | 9.0 | E-1 | 1.8 | 68.0 | 0.5 | 84/16 | 49 | 241 | 11.4 | 201 | V-0 | V-2 | G |
| | 8 | A-1 | 90.0 | B-2 | 10.0 | Side | C-1 | 48.0 | D-1 | 9.0 | E-1 | 1.8 | 68.0 | 0.5 | 84/16 | 3 | 233 | 11.5 | 122 | V-0 | V-2 | G |
| | 9 | A-1 | 80.0 | B-2 | 20.0 | Side | C-1 | 48.0 | D-1 | 9.0 | E-1 | 1.8 | 68.0 | 0.5 | 84/16 | 25 | 234 | 11.4 | 142 | V-0 | V-2 | G |
| | 10 | A-1 | 70.0 | B-2 | 30.0 | Side | C-1 | 48.0 | D-1 | 9.0 | E-1 | 1.8 | 68.0 | 0.5 | 84/16 | 41 | 234 | 11.5 | 165 | V-0 | V-2 | G |
| | 11 | A-1 | 60.0 | B-2 | 40.0 | Side | C-1 | 48.0 | D-1 | 9.0 | E-1 | 1.8 | 68.0 | 0.5 | 84/16 | 49 | 235 | 11.6 | 181 | V-0 | V-2 | G |
| | 12 | A-1 | 70.0 | B-3 | 30.0 | Side | C-1 | 48.0 | D-1 | 9.0 | E-1 | 1.8 | 68.0 | 0.5 | 84/16 | 21 | 241 | 11.7 | 120 | V-0 | V-2 | G |
| | 13 | A-2 | 70.0 | B-1 | 30.0 | Side | C-1 | 48.0 | D-1 | 9.0 | E-1 | 1.8 | 68.0 | 0.5 | 84/16 | 30 | 251 | 11.5 | 131 | V-0 | V-2 | G |
| | 14 | A-3 | 70.0 | B-1 | 30.0 | Side | C-1 | 48.0 | D-1 | 9.0 | E-1 | 1.8 | 68.0 | 0.5 | 84/16 | 31 | 235 | 11.5 | 150 | V-0 | V-2 | G |
| | 15 | A-4 | 70.0 | B-1 | 30.0 | Side | C-1 | 48.0 | D-1 | 9.0 | E-1 | 1.8 | 68.0 | 0.5 | 84/16 | 32 | 234 | 11.6 | 149 | V-0 | V-2 | G |
| | 16 | A-5 | 70.0 | B-1 | 30.0 | Side | C-1 | 48.0 | D-1 | 9.0 | E-1 | 1.8 | 68.0 | 0.5 | 84/16 | 35 | 229 | 11.3 | 160 | V-0 | V-2 | G |
| | 17 | A-6 | 70.0 | B-1 | 30.0 | Side | C-1 | 48.0 | D-1 | 9.0 | E-1 | 1.8 | 68.0 | 0.5 | 84/16 | 37 | 238 | 11.5 | 162 | V-0 | V-2 | G |
| | 18 | A-7 | 70.0 | B-1 | 30.0 | Side | C-1 | 48.0 | D-1 | 9.0 | E-1 | 1.8 | 68.0 | 0.5 | 84/16 | 35 | 236 | 11.5 | 146 | V-0 | V-2 | G |
| | 19 | A-8 | 70.0 | B-1 | 30.0 | Side | C-1 | 48.0 | D-1 | 9.0 | E-1 | 1.8 | 68.0 | 0.5 | 84/16 | 41 | 233 | 11.4 | 166 | V-0 | V-2 | G |
| | 20 | A-9 | 70.0 | B-1 | 30.0 | Side | C-1 | 48.0 | D-1 | 9.0 | E-1 | 1.8 | 68.0 | 0.5 | 84/16 | 43 | 232 | 11.3 | 173 | V-0 | V-2 | G |

[Table 4]

| | | Composition of thermoplastic resin composition | | | | | | | | | | | | | | | | Properties | | | | | | | |
|---|---|---|---|---|---|---|---|---|---|---|---|---|---|---|---|---|---|---|---|---|---|---|---|---|---|---|
| | | Semiaromatic polyamide (A) | | Aliphatic polyamide (B) | | | Bromine-based flame retardant (C) | | Flame retardant aid (D) | | Dripping inhibitor (E) | | Inorganic reinforcing material (F) | Antioxidant (G) | (C)/(D) mass ratio | Chemical resistance | Mechanical properties | | Bar flow fluidity | Flame retardancy | | Heat resistance |
| | | | | | | | | | | | | | | | | | | | | UL94 | | |
| | | Type | Parts by mass | Type | Parts by mass | Feed port | Type | Parts by mass | Type | Parts by mass | Type | Parts by mass | Parts by mass | Parts by mass | | Mass increase ratio R | Flexural strength | Flexural modulus of elasticity | | Thickness 0.8mm | Thickness 0.4mm | Appearance after reflow test |
| | | | | | | | | | | | | | | | | % | MPa | GPa | mm | | | |
| Example | 21 | A-1 | 70.0 | B-1 | 30.0 | Side | C-2 | 48.0 | D-1 | 9.0 | E-1 | 1.8 | 68.0 | 0.5 | 84/16 | 29 | 234 | 11.5 | 155 | V-0 | V-2 | G |
| | 22 | A-1 | 70.0 | B-1 | 30.0 | Side | C-1 | 48.0 | D-1 | 9.0 | E-2 | 1.8 | 68.0 | 0.5 | 84/16 | 29 | 236 | 11.5 | 156 | V-0 | V-2 | G |
| | 23 | A-1 | 70.0 | B-1 | 30.0 | Side | C-1 | 48.0 | D-1 | 12.0 | E-1 | 1.2 | 70.0 | 0.5 | 80/20 | 29 | 236 | 11.6 | 156 | V-0 | V-2 | G |
| | 24 | A-1 | 70.0 | B-1 | 30.0 | Side | C-1 | 61.0 | D-1 | 10.0 | - | 0.0 | 74.0 | 0.5 | 86/14 | 27 | 231 | 11.3 | 161 | V-0 | V-2 | G |
| | 25 | A-1 | 70.0 | B-1 | 30.0 | Side | C-1 | 96.0 | D-1 | 4.0 | E-1 | 1.7 | 10.6 | 0.4 | 96/4 | 31 | 125 | 5.5 | 181 | V-0 | V-2 | G |
| | 26 | A-1 | 70.0 | B-1 | 30.0 | Side | C-1 | 25.0 | D-1 | 10.0 | E-1 | 2.0 | 113.0 | 0.5 | 71/29 | 26 | 283 | 17.3 | 117 | V-0 | V-2 | G |
| | 27 | A-1 | 70.0 | B-1 | 30.0 | Side | C-1 | 58.0 | D-1 | 2.0 | E-1 | 1.9 | 70.0 | 0.5 | 97/3 | 27 | 234 | 11.5 | 158 | V-0 | V-2 | G |
| | 28 | A-1 | 70.0 | B-1 | 30.0 | Side | C-1 | 44.0 | D-1 | 24.0 | E-1 | 2.0 | 73.0 | 0.5 | 65/35 | 28 | 225 | 11.4 | 149 | V-0 | V-2 | G |
| | 29 | A-1 | 70.0 | B-1 | 30.0 | Side | C-1 | 48.0 | D-2 | 9.0 | E-1 | 1.8 | 68.0 | 0.5 | 84/16 | 28 | 233 | 11.6 | 151 | V-0 | V-2 | G |
| | 30 | A-1 | 70.0 | B-1 | 30.0 | Side | C-1 | 48.0 | D-3 | 12.0 | E-1 | 1.2 | 70.0 | 0.5 | 80/20 | 26 | 220 | 11.3 | 149 | V-0 | V-1 | G |
| | 31 | A-1 | 90.0 | B-1 | 10.0 | Side | C-1 | 48.0 | D-4 | 11.0 | E-1 | 1.8 | 68.0 | 0.5 | 81/19 | 2 | 230 | 11.6 | 112 | V-0 | V-2 | G |
| | 32 | A-1 | 80.0 | B-1 | 20.0 | Side | C-1 | 48.0 | D-4 | 11.0 | E-1 | 1.8 | 68.0 | 0.5 | 81/19 | 12 | 231 | 11.4 | 130 | V-0 | V-2 | G |
| | 33 | A-1 | 70.0 | B-1 | 30.0 | Side | C-1 | 48.0 | D-4 | 11.0 | E-1 | 1.8 | 68.0 | 0.5 | 81/19 | 28 | 232 | 11.5 | 154 | V-0 | V-2 | G |
| | 34 | A-1 | 60.0 | B-1 | 40.0 | Side | C-1 | 48.0 | D-4 | 11.0 | E-1 | 1.8 | 68.0 | 0.5 | 81/19 | 35 | 234 | 11.7 | 175 | V-0 | V-2 | G |
| | 35 | A-1 | 50.0 | B-1 | 50.0 | Side | C-1 | 48.0 | D-4 | 11.0 | E-1 | 1.8 | 68.0 | 0.5 | 81/19 | 42 | 236 | 11.6 | 188 | V-0 | V-2 | G |
| | 36 | A-1 | 46.0 | B-1 | 54.0 | Side | C-1 | 48.0 | D-4 | 11.0 | E-1 | 1.8 | 68.0 | 0.5 | 81/19 | 43 | 236 | 11.5 | 190 | V-0 | V-2 | G |
| | 37 | A-1 | 40.0 | B-1 | 60.0 | Side | C-1 | 48.0 | D-4 | 11.0 | E-1 | 1.8 | 68.0 | 0.5 | 81/19 | 48 | 237 | 11.4 | 198 | V-0 | V-2 | G |
| | 38 | A-1 | 90.0 | B-2 | 10.0 | Side | C-1 | 48.0 | D-4 | 11.0 | E-1 | 1.8 | 68.0 | 0.5 | 81/19 | 3 | 228 | 11.5 | 120 | V-0 | V-2 | G |
| | 39 | A-1 | 80.0 | B-2 | 20.0 | Side | C-1 | 48.0 | D-4 | 11.0 | E-1 | 1.8 | 68.0 | 0.5 | 81/19 | 24 | 229 | 11.4 | 141 | V-0 | V-2 | G |
| | 40 | A-1 | 70.0 | B-2 | 30.0 | Side | C-1 | 48.0 | D-4 | 11.0 | E-1 | 1.8 | 68.0 | 0.5 | 81/19 | 41 | 230 | 11.6 | 163 | V-0 | V-2 | G |
| | 41 | A-1 | 60.0 | B-2 | 40.0 | Side | C-1 | 48.0 | D-4 | 11.0 | E-1 | 1.8 | 68.0 | 0.5 | 81/19 | 49 | 228 | 11.6 | 178 | V-0 | V-2 | G |

[Table 5]

| | | Composition of thermoplastic resin composition | | | | | | | | | | | | | | | Properties | | | | | | |
|---|---|---|---|---|---|---|---|---|---|---|---|---|---|---|---|---|---|---|---|---|---|---|---|---|
| | | Semiaromatic polyamide (A) | | Aliphatic polyamide (B) | | | Bromine-based flame retardant (C) | | Flame retardant aid (D) | | Dripping inhibitor (E) | | Inorganic reinforcing material (F) | Antioxidant (G) | (C)/(D) mass ratio | Chemical resistance | Mechanical properties | | Bar flow fluidity | Flame retardancy | | Heat resistance |
| | | | | | | | | | | | | | | | | | | | | UL94 | | |
| | | Type | Parts by mass | Type | Parts by mass | Feed port | Type | Parts by mass | Type | Parts by mass | Type | Parts by mass | Parts by mass | Parts by mass | | Mass increase ratio R | Flexural strength | Flexural modulus of elasticity | | Thickness 0.8mm | Thickness 0.4mm | Appearance after reflow test |
| | | | | | | | | | | | | | | | | % | MPa | GPa | mm | | | |
| Example | 42 | A-1 | 70.0 | B-3 | 30.0 | Side | C-1 | 48.0 | D-4 | 11.0 | E-1 | 1.8 | 68.0 | 0.5 | 81/19 | 20 | 235 | 11.8 | 119 | V-0 | V-2 | G |
| | 43 | A-2 | 70.0 | B-1 | 30.0 | Side | C-1 | 48.0 | D-4 | 11.0 | E-1 | 1.8 | 68.0 | 0.5 | 81/19 | 30 | 248 | 11.5 | 128 | V-0 | V-2 | G |
| | 44 | A-3 | 70.0 | B-1 | 30.0 | Side | C-1 | 48.0 | D-4 | 11.0 | E-1 | 1.8 | 68.0 | 0.5 | 81/19 | 31 | 230 | 11.5 | 149 | V-0 | V-2 | G |
| | 45 | A-4 | 70.0 | B-1 | 30.0 | Side | C-1 | 48.0 | D-4 | 11.0 | E-1 | 1.8 | 68.0 | 0.5 | 81/19 | 31 | 231 | 11.6 | 146 | V-0 | V-2 | G |
| | 46 | A-5 | 70.0 | B-1 | 30.0 | Side | C-1 | 48.0 | D-4 | 11.0 | E-1 | 1.8 | 68.0 | 0.5 | 81/19 | 35 | 223 | 11.4 | 156 | V-0 | V-2 | G |
| | 47 | A-6 | 70.0 | B-1 | 30.0 | Side | C-1 | 48.0 | D-4 | 11.0 | E-1 | 1.8 | 68.0 | 0.5 | 81/19 | 36 | 234 | 11.5 | 159 | V-0 | V-2 | G |
| | 48 | A-7 | 70.0 | B-1 | 30.0 | Side | C-1 | 48.0 | D-4 | 11.0 | E-1 | 1.8 | 68.0 | 0.5 | 81/19 | 35 | 235 | 11.5 | 143 | V-0 | V-2 | G |
| | 49 | A-8 | 70.0 | B-1 | 30.0 | Side | C-1 | 48.0 | D-4 | 11.0 | E-1 | 1.8 | 68.0 | 0.5 | 81/19 | 41 | 228 | 11.4 | 162 | V-0 | V-2 | G |
| | 50 | A-9 | 70.0 | B-1 | 30.0 | Side | C-1 | 48.0 | D-4 | 11.0 | E-1 | 1.8 | 68.0 | 0.5 | 81/19 | 42 | 227 | 11.4 | 170 | V-0 | V-2 | G |
| | 51 | A-1 | 70.0 | B-1 | 30.0 | Side | C-2 | 48.0 | D-4 | 11.0 | E-1 | 1.8 | 68.0 | 0.5 | 81/19 | 29 | 227 | 11.5 | 151 | V-0 | V-2 | G |
| | 52 | A-1 | 70.0 | B-1 | 30.0 | Side | C-1 | 48.0 | D-4 | 11.0 | E-2 | 1.8 | 68.0 | 0.5 | 81/19 | 28 | 231 | 11.6 | 153 | V-0 | V-2 | G |
| | 53 | A-1 | 70.0 | B-1 | 30.0 | Side | C-1 | 48.0 | D-4 | 13.0 | E-1 | 1.2 | 70.0 | 0.5 | 79/21 | 30 | 234 | 11.5 | 155 | V-0 | V-2 | G |
| | 54 | A-1 | 70.0 | B-1 | 30.0 | Side | C-1 | 61.0 | D-4 | 10.0 | - | 0.0 | 74.0 | 0.5 | 86/14 | 27 | 228 | 11.3 | 158 | V-0 | V-2 | G |
| | 55 | A-1 | 70.0 | B-1 | 30.0 | Side | C-1 | 96.0 | D-4 | 4.0 | E-1 | 1.7 | 10.6 | 0.4 | 96/4 | 30 | 118 | 5.8 | 178 | V-0 | V-2 | G |
| | 56 | A-1 | 70.0 | B-1 | 30.0 | Side | C-1 | 25.0 | D-4 | 10.0 | E-1 | 2.0 | 113.0 | 0.5 | 71/29 | 26 | 280 | 17.3 | 113 | V-0 | V-2 | G |
| | 57 | A-1 | 70.0 | B-1 | 30.0 | Side | C-1 | 58.0 | D-4 | 2.0 | E-1 | 1.9 | 70.0 | 0.5 | 97/3 | 26 | 230 | 11.5 | 155 | V-0 | V-2 | G |
| | 58 | A-1 | 70.0 | B-1 | 30.0 | Side | C-1 | 44.0 | D-4 | 24.0 | E-1 | 2.0 | 73.0 | 0.5 | 65/35 | 28 | 220 | 11.5 | 146 | V-0 | V-2 | G |

[Table 6]

| | | Composition of thermoplastic resin composition | | | | | | | | | | | | | | Properties | | | | | |
|---|---|---|---|---|---|---|---|---|---|---|---|---|---|---|---|---|---|---|---|---|---|---|
| | | Semiaromatic polyamide (A) | | Aliphatic polyamide (B) | | | Bromine-based flame retardant (C) | | Flame retardant aid (D) | | Dripping inhibitor (E) | | Inorganic reinforcing material (F) | Antioxidant (G) | (C)/(D) mass ratio | Chemical resistance | Mechanical properties | | Bar flow fluidity | Flame retardancy | | Heat resistance |
| | | | | | | | | | | | | | | | | | | | | UL94 | | |
| | | Type | Parts by mass | Type | Parts by mass | Feed port | Type | Parts by mass | Type | Parts by mass | Type | Parts by mass | Parts by mass | Parts by mass | | Mass increase ratio R | Flexural strength | Flexural modulus of elasticity | | Thickness 0.8mm | Thickness 0.4mm | Appearance after reflow test |
| | | | | | | | | | | | | | | | | % | MPa | GPa | mm | | | |
| Comparative Example | 1 | A-1 | 100.0 | - | 0.0 | - | C-1 | 48.0 | D-1 | 9.0 | E-1 | 1.8 | 68.0 | 0.5 | 84/16 | 0.1 | 229 | 11.4 | 95 | V-0 | V-2 | G |
| | 2 | A-1 | 46.0 | B-1 | 54.0 | Main | C-1 | 48.0 | D-1 | 9.0 | E-1 | 1.8 | 68.0 | 0.5 | 84/16 | 52 | 240 | 11.5 | 192 | V-0 | V-2 | P |
| | 3 | A-1 | 40.0 | B-1 | 60.0 | Main | C-1 | 48.0 | D-1 | 9.0 | E-1 | 1.8 | 68.0 | 0.5 | 84/16 | 54 | 235 | 11.5 | 215 | V-0 | V-2 | P |
| | 4 | A-1 | 30.0 | B-1 | 70.0 | Side | C-1 | 48.0 | D-1 | 9.0 | E-1 | 1.8 | 68.0 | 0.5 | 84/16 | 56 | 239 | 11.5 | 212 | V-0 | V-2 | P |
| | 5 | A-1 | 40.0 | B-1 | 60.0 | Side | - | 0.0 | D-3 | 48.0 | E-1 | 1.8 | 68.0 | 0.5 | 0/100 | 59 | 189 | 11.2 | 172 | V-0 | V-1 | P |
| | | | | | | | | | D-1 | 9.0 | | | | | | | | | | | | |
| | 6 | A-1 | 70.0 | B-1 | 30.0 | Side | C-1 | 18.0 | D-1 | 7.0 | E-1 | 1.5 | 55.0 | 0.4 | 72/28 | 25 | 231 | 11.4 | 143 | V-1 | V-2 | G |
| | 7 | A-1 | 70.0 | B-1 | 30.0 | Side | C-1 | 103.0 | D-1 | 13.0 | E-1 | 2.5 | 94.0 | 0.6 | 89/11 | - | - | - | - | - | - | - |
| | 8 | A-1 | 70.0 | B-1 | 30.0 | Side | C-1 | 45.0 | D-1 | 1.9 | E-1 | 1.7 | 64.0 | 0.4 | 96/4 | 27 | 235 | 11.5 | 150 | V-1 | V-2 | G |
| | 9 | A-1 | 70.0 | B-1 | 30.0 | Side | C-1 | 55.0 | D-1 | 26.0 | E-1 | 2.1 | 79.0 | 0.5 | 68/32 | - | - | - | - | - | - | - |
| | 10 | A-1 | 100.0 | - | 0.0 | - | C-1 | 48.0 | D-4 | 11.0 | E-1 | 1.8 | 68.0 | 0.5 | 81/19 | 0.1 | 226 | 11.4 | 92 | V-0 | V-2 | G |
| | 11 | A-1 | 46.0 | B-1 | 54.0 | Main | C-1 | 48.0 | D-4 | 11.0 | E-1 | 1.8 | 68.0 | 0.5 | 81/19 | 51 | 240 | 11.5 | 192 | V-0 | V-2 | P |
| | 12 | A-1 | 40.0 | B-1 | 60.0 | Main | C-1 | 48.0 | D-4 | 11.0 | E-1 | 1.8 | 68.0 | 0.5 | 81/19 | 52 | 230 | 11.6 | 210 | V-0 | V-2 | P |
| | 13 | A-1 | 30.0 | B-1 | 70.0 | Side | C-1 | 48.0 | D-4 | 11.0 | E-1 | 1.8 | 68.0 | 0.5 | 81/19 | 55 | 232 | 11.5 | 209 | V-0 | V-2 | P |
| | 14 | A-1 | 40.0 | B-1 | 60.0 | Side | - | 0.0 | D-3 | 48.0 | E-1 | 1.8 | 68.0 | 0.5 | 0/100 | 57 | 182 | 11.2 | 169 | V-0 | V-1 | P |
| | | | | | | | | | D-4 | 9.0 | | | | | | | | | | | | |
| | 15 | A-1 | 40.0 | B-1 | 60.0 | Side | - | 0.0 | D-4 | 48.0 | E-1 | 1.8 | 68.0 | 0.5 | 0/100 | 59 | 282 | 11.3 | 170 | V-0 | V-1 | P |
| | 16 | A-1 | 70.0 | B-1 | 30.0 | Side | C-1 | 18.0 | D-4 | 11.0 | E-1 | 1.5 | 55.0 | 0.4 | 62/38 | 24 | 227 | 11.4 | 141 | V-1 | V-2 | G |
| | 17 | A-1 | 70.0 | B-1 | 30.0 | Side | C-1 | 103.0 | D-4 | 13.0 | E-1 | 2.5 | 94.0 | 0.6 | 89/11 | - | - | - | - | - | - | - |
| | 18 | A-1 | 70.0 | B-1 | 30.0 | Side | C-1 | 45.0 | D-4 | 1.9 | E-1 | 1.7 | 64.0 | 0.4 | 96/4 | 27 | 232 | 11.6 | 146 | V-1 | V-2 | G |
| | 19 | A-1 | 70.0 | B-1 | 30.0 | Side | C-1 | 55.0 | D-4 | 26.0 | E-1 | 2.1 | 79.0 | 0.5 | 68/32 | - | - | - | - | - | - | - |

The thermoplastic resin compositions of Examples 1 to 58, in which the content of the constituents was within the range specified in the present invention and additionally, the aliphatic polyamide (B) was fed by the side feeder and melt-kneaded, had excellent heat resistance, chemical resistance, flame retardancy, and mechanical properties as well as had excellent fluidity. The thermoplastic resin composition of Example 30, in which a metal phosphinate as the flame retardant aid (D) was used, had good flame retardancy also in the specimen having a thickness of 0.4 mm.

The resin composition of Comparative Examples 1 and 10 had low fluidity because of containing no aliphatic polyamide (B).

The resin compositions of Comparative Examples 2, 3, 11, and 12, which contained the aliphatic polyamide (B), had improved fluidity. However, the compositions were produced by feeding the aliphatic polyamide (B) simultaneously with the semiaromatic polyamide (A) and the like from the main feed port, without side-feeing, and melt-kneading the mixture. Thus, the compositions had low chemical resistance, had occurrence of blisters also in reflowing, and also had low heat resistance.

The resin compositions of Comparative Examples 4 and 13 had an excessively high content of the aliphatic polyamide (B) and thus had low chemical resistance and heat resistance.

The resin compositions of Comparative Examples 5, 14, and 15 contained no bromine-based flame retardant (C) and thus had low chemical resistance and heat resistance even when the compositions contained a metal phosphinate as the flame retardant aid (D) or the content of the flame retardant aid (D) was increased.

The resin compositions of Comparative Examples 6 and 16 had a low content of the bromine-based flame retardant (C), and those of Comparative Examples 8 and 18 had a low content of the flame retardant aid (D). Thus, the specimens having a thickness of 0.8 mm each prepared from these compositions had flame retardancy of V-1.

In Comparative Examples 7 and 17, which had a high content of the bromine-based flame retardant (C), and also in Comparative Examples 9 and 19, which had a high content of the flame retardant aid (D), it was difficult to take out the mixture into a strand shape because of the low extrusion operability, and thus it was not possible to obtain pellets of the resin compositions.

**Claims**

1.  A thermoplastic resin composition comprising:

    100 parts by mass in total of a semiaromatic polyamide (A) and an aliphatic polyamide (B);
    20 to 100 parts by mass of a bromine-based flame retardant (C); and
    2 to 25 parts by mass of a flame retardant aid (D);

    wherein a mass ratio between the semiaromatic polyamide (A) and the aliphatic polyamide (B), (A/B), is from 90/10 to 40/60,
    the semiaromatic polyamide (A) has a melting point of 280°C or higher, and
    a mass increase ratio R after 48-hour immersion in 50% sulfuric acid at 23°C is 50% or less.

2.  The thermoplastic resin composition according to claim 1, wherein an aliphatic diamine component in the semiaromatic polyamide (A) is 1,10-decanediamine.

3.  The thermoplastic resin composition according to claim 1 or 2, wherein the aliphatic polyamide (B) is polyamide 6 and/or polyamide 66.

4.  The thermoplastic resin composition according to any of claims 1 to 3, wherein a mass ratio between the bromine-based flame retardant (C) and the flame retardant aid (D), (C/D), is 95/5 to 60/40.

5.  The thermoplastic resin composition according to any of claims 1 to 4, wherein the semiaromatic polyamide (A) comprises an aliphatic monocarboxylic acid component, the aliphatic monocarboxylic acid has 15 to 30 carbon atoms, and a content of the aliphatic monocarboxylic acid component is 0.3 to 4.0 mol% based on total monomers constituting the semiaromatic polyamide (A).

6.  The thermoplastic resin composition according to any of claims 1 to 5, wherein the bromine-based flame retardant (C) is brominated polystyrene.

7.  The thermoplastic resin composition according to any of claims 1 to 6, wherein the flame retardant aid (D) is one or more selected from a group consisting of zinc stannate, zinc borate, and antimony trioxide.

**8.** The thermoplastic resin composition according to any of claims 1 to 7, further comprising a dripping inhibitor (E) .

**9.** The thermoplastic resin composition according to any of claims 1 to 8, further comprising an inorganic reinforcing material (F).

**10.** A molded body obtained by molding the thermoplastic resin composition according to any of claims 1 to 9.

<table>
<tr><td colspan="2" align="center"><strong>INTERNATIONAL SEARCH REPORT</strong></td><td>International application No.<br>PCT/JP2017/022067</td></tr>
</table>

**A. CLASSIFICATION OF SUBJECT MATTER**
*C08L77/00(2006.01)i, C08K3/24(2006.01)i, C08L25/18(2006.01)i*

According to International Patent Classification (IPC) or to both national classification and IPC

**B. FIELDS SEARCHED**

Minimum documentation searched (classification system followed by classification symbols)
C08L77, C08K3/24, 3/38, C08L25

Documentation searched other than minimum documentation to the extent that such documents are included in the fields searched
Jitsuyo Shinan Koho             1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-41117 A  (Kuraray Co., Ltd.),<br>13 February 2003 (13.02.2003),<br>claims; paragraphs [0012], [0022], [0033],<br>[0038], [0057] to [0061]; table 3; example 7<br>& US 2003/0023008 A1<br>claims; paragraphs [0020], [0033], [0034],<br>[0045], [0046], [0057] to [0092]; example 7<br>& EP 1262525 A1      & KR 10-2002-0089187 A<br>& CN 1390887 A | 1,2,4-10 |
| Y | WO 2015/056765 A1  (Unitika Ltd.),<br>23 April 2015 (23.04.2015),<br>claims; paragraphs [0005], [0034], [0040],<br>[0048]; example 1<br>(Family: none) | 1,2,4-10 |

☒  Further documents are listed in the continuation of Box C.          ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>14 August 2017 (14.08.17) | Date of mailing of the international search report<br>22 August 2017 (22.08.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/022067

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2015/166896 A1  (Unitika Ltd.),<br>05 November 2015 (05.11.2015),<br>claims; examples 2, 23 to 27<br>& US 2017/0037217 A1<br>claims; examples 2, 23 to 27<br>& EP 3138878 A1         & CN 106029783 A | 1,2,4-10 |
| Y | WO 2015/159834 A1  (Unitika Ltd.),<br>22 October 2015 (22.10.2015),<br>claims; paragraph [0010]; table 3<br>& US 2017/0022349 A1<br>claims; paragraph [0028]; table 3<br>& EP 3133123 A1         & CN 106029782 A | 1,2,4-10 |
| Y | JP 2011-116888 A  (Ube Industries, Ltd.),<br>16 June 2011 (16.06.2011),<br>claims; table 1<br>(Family: none) | 1,2,4-10 |
| A | JP 9-279023 A  (Unitika Ltd.),<br>28 October 1997 (28.10.1997),<br>claims<br>(Family: none) | 1-10 |
| A | JP 2014-15594 A  (Asahi Kasei Chemicals Corp.),<br>30 January 2014 (30.01.2014),<br>claims<br>(Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009017043 A